# EUROPÄISCHE PATENTSCHRIFT

(11) **EP 0 646 098 B1**
(45) Veröffentlichungstag und Bekanntmachung des Hinweises auf die Patenterteilung: **03.09.1997**
(21) Anmeldenummer: 93912585.2
(22) Anmeldetag: 11.06.1993
(51) Int. Cl.: C01B 33/193, B01F 17/00, C09D 7/00, C11D 3/60, A01N 25/04, C09K 7/02, A62D 1/00, A47C 27/08

(54) **VERFAHREN ZUR VERDICKUNG VON WASSER, DERART HERGESTELLTES WASSER UND SEINE VERWENDUNG**
METHOD OF INCREASING THE VISCOSITY OF WATER, WATER OBTAINED BY THE METHOD AND ITS USE
PROCEDE D'EPAISSISSEMENT DE L'EAU, DE L'EAU OBTENU SELON LE PROCEDE ET SON APPLICATION

(30) Priorität: 12.06.1992 DE 4219266; 04.08.1992 DE 4225584; 05.05.1993 DE 4314749
(43) Veröffentlichungstag der Anmeldung: 05.04.1995
(60) Teilanmeldung: 97100449.4
(73) Patentinhaber: LÖHNERT, Gernot, D-46499 Hamminkeln (DE); BUIL, Jürgen, D-47533 Kleve (DE); LÖHNERT, Katharina, D-46499 Hamminkeln (DE)
(72) Erfinder: LÖHNERT, Gernot, D-46499 Hamminkeln (DE); BUIL, Jürgen, D-47533 Kleve (DE); LÖHNERT, Katharina, D-46499 Hamminkeln (DE)
(74) Vertreter: Pfenning, Meinig & Partner
(86) Internationale Anmeldenummer: DE9300512
(87) Internationale Veröffentlichungsnummer: WO9325474

(56) Entgegenhaltungen:
- EP-A- 0 407 003
- EP-A- 0 432 271
- WO-A-92/13602
- DE-A- 1 542 748
- DE-A- 2 104 061
- DE-B- 2 524 309
- GB-A- 2 099 296
- US-A- 4 321 157
- Patent Abstracts of Japan, Band 3, Nr 97, M-69, 1979-08-17, Zusammenfasung von JP, 54-71900 (ONODA CEMENT CO LTD), 79-06-08

## Beschreibung

Verdickung von Flüssigkeiten ist in der Technik von Bedeutung um ihr Fließverhalten zu kontrollieren, um beispielsweise bei ihrer Verwendung als Vorrats- oder Transportmittel für Wirkstoffe Verluste durch Verlaufen zu vermeiden, in ihnen enthaltene sedimentierbare Teilchen in homogener Mischung zu halten, die Flüssigkeiten zur Erzeugung von längerdauernder Wirksamkeit an Oberflächen zu fixieren oder sie in ihrem Verhalten als hydrostatische Medien zur Druckverteilung zum Beispiel durch Verminderung oder Ausschaltung der Wellenfortpflanzung zu verbessern.

Wasser ist als flüssiges Medium durch seine nicht gegebene Toxizität, sein Lösevermögen, seine Verträglichkeit, Preiswürdigkeit und gute Verfügbarkeit ausgezeichnet. Dagegen ist sein schnelles, unkontrolliertes Verlaufen, die Haftung von nur dünnen Wasserfilmen an Oberflächen, die rasche Sedimentierung von in ihm enthaltenen Feststoffen oder die in Wasser erfolgende starke Wellenfortpflanzung für seine technische Verwendung häufig von Nachteil. Dies ist bei seiner Verwendung als Löschmittel, als Flüssigkeit zur Aufnahme von Reinigungs- oder Pflanzenschutzmitteln der Fall, aber auch bei der Nutzung seiner sehr guten Druckverteilungswirkung.

Die Herstellung von verdicktem Wasser zur Erfüllung der genannten technischen Aufgaben, insbesondere in einer dauerhaften und kontrollierbaren Weise, und zur Vermeidung der Beeinträchtigung seiner vorteilhaften Eigenschaften mit nur geringen Zusatzmengen an Hilfsmitteln ist daher eine oft gestellte Forderung. Hierzu werden in der Technik unterschiedliche, die jeweils besonderen Anforderungen berücksichtigende Wege beschritten.
Organische Verdickungsmittel, wie Gelatine, Stärken oder Zellulosederivate, natürliche Polysaccharide (Gums) oder synthetische, wasserlösliche Hochpolymere verändern die Eigenschaften des Wassers in für die genannten technischen Verwendungen häufig nachteiliger Weise durch Erzeugung klebender oder fädenziehender Eigenschaften, oder durch schlechte Haltbarkeit (oxydativer oder mikrobieller Abbau, vgl. Kirk-Othmer' Encyclopedia of Chemical Technology, 3rd Ed., Vol. 18, S.623).

Setzt man dagegen anorganische Verdickungsmittel wie die kristallinen Silikate (Bentonit, Attapulgit oder Glimmer) allein als haltbare Verdickungsmittel für Wasser ein, so werden Konzentrationen von deutlich über 10% benötigt, um technisch nutzbare Verdickungswirkungen zu erzielen, wie dies von der Verwendung mit Bentonit oder Attapulgit verdickten Wasser für die Waldbrandbekämpfung bekannt ist (Lit. z.B. C. E. Hardy, Chemicals for Forest Fire Fighting, 3rd. Ed. Boston, 1977). Kristalline Schichtsilikate wie der Bentonit bilden nach dem Verdunsten des Wassers oft unerwünschte, nur schwer entfernbare Rückstände.

Daneben ist es aus DE-A-21 04 061 bekannt, Gele, die durch Neutralisation von Wasserglas erhalten wurden und als Additiv Polyvinylpyrrolidon enthalten können, als Mittel zur Feuerbekämpfung zu verwenden.

Allen genannten Verdickungsmitteln für Wasser ist aufgrund ihres Quellungsverhaltens ein erheblicher Zeitbedarf (Stunden bis Tage) zur Erreichung der angestrebten maximalen Verdickung gemeinsam, was durch äußere Einflüsse schwierig zu kontrollieren ist und eine oft umständliche Handhabung erfordert. Durch Vergelung von unstabilisierten Kieselsolen oder durch Neutralisation von Wasserglas hergestellte Kieselgele können schon bei niedrigeren Konzentrationen Verdickungswirkung erzeugen, scheiden aufgrund der Polykondensation der durch Neutralisation entstandenen Kieselsäure aber kontinuierlich Wasser aus dem Gel ab (Synärese) wobei das Gel schrumpft. Bei Verdunsten des Wassers entstehen verhärtete Rückstände, die nur schwer von Flächen, aus Gefäßen oder Geräten, Leitungen o.ä. zu entfernen sind, sodaß die Verwendung so verdickten Wassers z.B. mit Feuerlöschern, Pflanzenschutzmittelspritzen, oder als Füllmedium z.B. für Wasserbett-Matratzen ausscheidet.
Auch ist die Vergelung der Kieselsäure in niedrigen Konzentrationen in Wasser zeitlich schwierig kontrollierbar, selbst beim Zusatz von Hilfsstoffen wie Salzen.
Hochdisperse, amorphe, synthetische Kieselsäure zeigt die zuletzt genannten nachteiligen Eigenschaften zwar nicht, sie findet als Verdickungsmittel aber vorwiegend für organische, hydrophobe Flüssigkeiten Verwendung, weil sie in niedriger Konzentration in Wasser als Verdickungsmittel aufgrund ihrer hydrophilen Eigenschaften eine deutlich schwächere Wirkung zeigt. Dies trifft auch für andere flüssige hydrophile Medien, wie z. B. Glycerin, zu.

Es bestätigt auch R. K. Iler z. B. in "The Chemistry of Silica" , Wiley, New York 1979, S. 336, daß Dispersionen von pyrogen hergestellter Kieselsäure in wässriger Lösung Sole bilden, welche keine starken Gele bilden, und daher als anorganische Binder nur geringen Nutzen haben.

In der vorliegenden Erfindung wurde zur Lösung der Aufgabenstellung der momentanen Bereitung von haltbar verdicktem Wasser gefunden, daß aus hochdisperser synthetischer, bevorzugt aus pyrogener Kieselsäure durch Aufschlämmung in Wasser herstellbare, 1-9% Kieselsäure enthaltende Kieselsole, z. B. Aufschlämmungen von 1 - 9 %, vorzugsweise 2 - 5 % an pyrogener Kieselsäure in Wasser mit Poly(N-vinyl-2-pyrrolidon) in Konzentrationen von 0,05% - 0,5% zur momemtanen, und dauerhaften Verdickung gebracht werden können.

Gegebenenfalls erfolgt ein geringer Zusatz von bestimmten wasserlöslichen organischen Verbindungen, nämlich Ethern mit Fettalkoholen, Zuckeralkoholen, oder Estern mit Fettsäuren des Polyethylenglykols oder Polypropylenglykols, der Molmassen >250 - 50.000, in Konzentrationen von 0,005% - 1,5%, von Polyethylenglykol oder Polypropylenglykol der Molmassen >600 - 50.000 in Konzentrationen von 0,05% bis 1,5%, von Polyethylenimin in Konzentrationen von >0,003.

Kennzeichnend und unterschiedlich zu den erwähnten anderen Verdickungsmethoden für Wasser ist bei dieser Verdickungsweise insbesondere das ausgeprägt rheopexe Verhalten des Systems, welches sich durch Einwirkung von Schereinflüssen, wie z.B. Rühren mit einem elektrischen Rührstab (800-1600 U/min), Durchgang durch Kreiselpumpen, oder bei Verspritzung durch Düsen momentan zeigt. Dabei erhöht sich die Verdickung und es wird eine homogene und lange haltbare Verdickungswirkung erreicht.
Die genannten organischen Verbindungen sind dabei in den genannten Konzentrationen allein oder auch in Kombination verwendbar. Der Einsatzbereich für Polyethylenglykol oder seiner genannten Derivate ist auf einen pH-Bereich von 1-9 begrenzt, bei höheren pH-Werten tritt Verdünnung zu einer vor ihrem Zusatz bestehenden wasserdünnen Konsistenz ein. Bei Polyethylenimin ist diese Verdünnung unterhalb eines pH-Werts von 3 feststellbar. Durch Kombination beider Zusätze ist die Verdickung in einem entsprechend erweiterten pH-Bereich möglich. Die synthetische amorphe Kieselsäure kann auch vor der Wasserzugabe mit den genannten organischen Verbindungen trocken vermischt werden, diese Gemische bis zum Gebrauch gelagert und dann mit der zur Einstellung der notwendigen Konzentration erforderlichen Wassermenge vermischt werden.
Ebenfalls ist ein direktes Vermischen der Kieselsäure und der genannten organischen Zusätze mit dem Wasser möglich.

Die so hergestellte verdickte Aufschlämmung synthetischer, amorpher Kieselsäure von niedriger Konzentration in Wasser ("verdicktes Wasser") kann z. B. mit sehr gutem Erfolg als Löschmittel für Brände der Klasse A (insbesondere der schwer löschbaren Bränden von Reifen oder anderen Kunststoffen) verwendet werden, da sie auch an hydrophoben oder heißen Flächen in massiver Form haftet und somit die Bereithaltung von dicken Wasserschichten an horizontalen, vertikalen oder sogar nach unten weisenden Flächen aller Art ermöglicht, sie eignet sich als Bohrspülflüssigkeit, weil sie Stabilität gegen Schereinflüsse unter Druck und bei erhöhter Temperatur aufweist und sie ist als Träger für Reinigungsmittel, wie Entkalkungsmittel verwendbar, da in ihr z. B. organische Säuren wie Zitronen-, Wein-, oder Äpfelsäure gelöst werden können, welche zur Erzeugung einer andauernden Wirkung an verkalkten Flächen aufgebracht werden können.

Die Verwendung des erfindungsgemäß verdickten Wassers ist auch als hydrostatische, druckausgleichende Füllung für Wasserbett-Matratzen oder von Sitzkissen oder Gelsätteln mit dem Vorteil der Ausschaltung der Wellenreflexion sehr vorteilhaft. Dabei ist auch über einen Zeitraum von mehreren Monaten in einem flexiblen Sitzkissen keine Bildung von Mikroorganismen im verdickten Wasser zu beobachten, während ein vergleichsweise mit Wasser gefülltes Kissen an den Innenwänden nach derselben Zeit schleimige Absonderungen, vermutlich durch Algenbildung, aufweist.

Das erfindungsgemäß verdickte Wasser zeigt Verträglichkeit mit darin gelösten Salzen anorganischer und organischer Säuren auch in höheren Konzentrationen (z. B. einem Zusatz von 30% an Kaliumacetat oder Kaliumlactat), sodaß eine Frostbeständigkeit (z. B. bei -30°C) erreichbar ist. Auch Zucker oder deren hydrierte Derivate wie Sorbitol; Glykole oder Glycerin können in beliebigen Konzentrationen im verdickten Wasser gelöst werden, ohne daß die Verdickung beeinträchtigt wird. Damit kann das so verdickte Wasser ebenfalls als flüssige, wiederverwendbare Füllung für Kühlkissen, Kühlakkus oder Kühlbeutel eingesetzt werden.
Aufgrund der guten Handhabungseigenschaften sind diese Mischungen bei Bedarf auch beliebig umfüllbar und damit wiederverwendbar. Dies ist mit organischen Gelbildnern hergestellten Füllungen dieser Art zumeist nicht möglich.
Durch die haltbare Verdickung ist weiterhin die Aufnahme und die stabile Suspension von sedimentierbaren mineralischen, oder organischen unlöslichen Stoffen, auch Proteinen möglich, was für analytische, aber auch synthetisch-präparative Zwecke, wie Stofftrennung von Nutzen ist.

Für die Verwendung als Feuerlöschmittel läßt sich das verdickte Wasser auch mit Schaumkonzentraten (z. B. des AFFF-Typs) versetzen, wobei sowohl die Verdickung als auch die Verschäumbarkeit erhalten bleibt. Es entsteht hierbei ein verdickter Schaum, welcher im Gegensatz zu allein mit AFFF erzeugtem Schaum ein erheblich besseres Haftungsvermögen an Flächen zeigt, sodaß ein unkontrolliertes Verlaufen des Schaums vermieden wird und dabei die Bekämpfung von Bränden fester Stoffe (Klasse A) sowie von brennbaren Flüssigkeiten (Klasse B) möglich ist.

Die folgenden Beispiele erläutern die Erfindung näher, ohne sie einzuschränken :

### Beispiel 1

Eine Aufschlämmung von 150 g pyrogener Kieselsäure (Aerosil 200, reg. Wz. Fa. Degussa) in 4850 ml Wasser wird mit 10 g an Poly(N-vinyl-2-pyrrolidon) (Sokalan HP 50 oder HP 53, reg. Wz. Fa. BASF), versetzt, und mit einem Glasstab umgerührt. Dabei tritt eine leichte Viskositätssteigerung ein, welche sich in einer Auslaufzeit im Becher nach DIN 53 211 von 9 sec. (ohne Sokalan) auf 20 sec (mit Sokalan) ausdrückt.
Schert man die Mischung anschließend nur kurz (1 sec) mit einem Rührstab (Philips Elektroquirl, 800/1600 U/min, Durchmesser des Schermessers 4 cm), so erhöht sich die Viskosität auf einen Wert, bei dem eine pastenförmige, an Wänden stark schichtbildende Konsistenz entsteht, welche im Konus des Auslaufbechers hängen bleibt und somit eine Bestimmung der Viskosität im Becher nicht mehr möglich macht.
Die Mischung zeigt eine sehr gute Haltbarkeit der Homogenität, Haftung an Oberflächen, wie an Polyethylen, Glas, Metall sowie andauernde Stabilität gegenüber Scherung selbst bei 95°C. Sie ist dennoch sehr gut mit gebräuchlichen Feuerlöschgeräten oder Pflanzenschutzmittelspritzen durch Düsen versprühbar. Die Mischung zeigt eine stark verzögerte Abgabe von Wasser bei direktem Kontakt mit saugenden Substraten wie z.B. Erdreich.
Dies ist von Vorteil bei Verwendung des so verdickten Wassers zum Löschen von Bränden in Mülldeponien, da eine gezielte Plazierung durch Injektion des Löschmittels ohne wesentliche unkontrollierte Penetration möglich ist. Unverdicktes Wasser penetriert dagegen rasch und nicht kontrollierbar und geht als Löschmittel so schnell aus den brandgefährdeten Zonen verloren.

### Beispiel 2

Eine Menge von 30 g pyrogener Kieselsäure wird mit 500 ml Wasser und 470 g einer Lösung von Sorbitsirup (70 % in Wasser) vermischt. Durch Zugabe von 2 g an Poly(N-vinyl-2-pyrrolidon) und Mischung mit einem Elektroquirl bei 800 U/min erhält man eine gießfähige Paste, welche als Füllung für Kühlbeutel verwendet wird. Die Masse ist bei -20°C noch ausreichend formbar, sodaß sie sich an unebene Flächen anpaßt. Sie kann häufigen Einfrier- und Auftauzyklen unterworfen und somit mehrfach wiederverwendet werden.

## Patentansprüche

1. Verfahren zur Herstellung von verdicktem Wasser, dadurch, daß ein Sol von 1 - 9 Gew.% hochdisperser synthetischer, bevorzugt pyrogener Kieselsäure in Wasser mit einem Zusatz von Additiven hergestellt wird,
dadurch **gekennzeichnet,** daß als Additiv 0.05 - 0,5 Gew.% Poly(N-vinyl-2-pyrrolidon) (PVP) eingesetzt wird.

2. Verfahren nach Anspruch 1,
dadurch gekennzeichnet, daß PVP in Mischung mit den bekannten Additiven von Ethern mit Fettalkoholen, Zuckeralkoholen, oder Estern mit Fettsäuren des Polyethylenglykols oder Polypropylenglykols der Molmassen > 250 - 50.000, von Polyethylenglykol oder Polypropylenglykol der Molmassen > 600 - 50.000 oder von Polyethylenimin eingesetzt wird.

3. Verfahren nach Anspruch 1 oder 2,
dadurch gekennzeichnet, daß eine Verstärkung der Verdickungswirkung durch kräftiges Rühren, schereinwirkung oder durch Versprühprozesse erzielt wird.

4. Verdicktes Wasser,
dadurch gekennzeichnet, daß es nach mindestens einem der Ansprüche 1 bis 3 erhalten worden ist.

5. Verwendung des verdickten Wassers nach Anspruch 4 als Bindemittel oder Trägersubstanz für Farbpigmente, Reinigungsmittel, Pflanzenschutzmittel, Bohrspülflüssigkeiten, Feuerlöschmittel oder als Füllung für Wasserbettmatratzen oder Sitzkissen.

## Claims

1. Process for the preparation of thickened water by preparing a sol of 1 - 9% by weight of finely divided synthetic, preferably pyrogenic, silica in water with an addition of additives, characterized in that the additive used is 0.05 - 0.5% by weight of poly(N-vinyl-2-pyrrolidone) (PVP).

2. Process according to Claim 1, characterized in that PVP is used in admixture with the known additives of ethers of fatty alcohols, sugar alcohols, or esters of fatty acids of polyethylene glycol or polypropylene glycol having molar masses of > 250 - 50,000, of polyethylene glycol or polypropylene glycol having molar masses of > 600 - 50,000 or of polyethylenimine.

3. Process according to Claim 1 or 2, characterized in that reinforcement of the thickening action is achieved by vigorous stirring, action of shear or by spraying processes.

4. Thickened water, characterized in that it has been obtained according to at least one of Claims 1 to 3.

5. Use of the thickened water according to Claim 4 as a binder or carrier substance for colour pigments, cleaning agents, crop protection agents, drilling fluids, fire extinguishing media or as filling for water bed mattresses or seating cushions.

## Revendications

1. Procédé de préparation d'eau à viscosité augmentée dans lequel on prépare un sol comprenant de 1 à 9% en poids d'acide silicique synthétique à haute dispersion, de préférence pyrogène, dans l'eau avec addition d'un additif, caractérisé en ce que, en tant qu'additif, on emploie de 0,05 à 0,5% en poids de poly(N-vinyl-2-pyrrolidone) (PVP).

2. Procédé selon la revendication 1, caractérisé en ce que l'on ajoute le PVP en mélange avec les additifs connus à base d'éthers d'alcools gras, de sucre-alcools, ou d'esters d'acides gras du polyéthylèneglycol ou du polypropylèneglycol de masse molaire supérieure à 250-50.000, de polyéthylèneglycol ou de polypropylèneglycol de masse molaire supérieure à 600-50.000 ou de polyéthylèneimine.

3. Procédé selon la revendication 1 ou 2, caractérisé en ce qu'on obtient un renforcement de l'effet d'augmentation de la viscosité par une agitation vigoureuse, l'action de forces de cisaillement ou des processus de pulvérisation.

4. Eau à viscosité augmentée, caractérisée en ce qu'elle a été obtenue selon au moins une des revendications 1 à 3.

5. Utilisation d'eau à viscosité augmentée selon la revendication 4 comme agent liant ou substance support pour des pigments colorés, des agents nettoyants, des agents phytosanitaires, des fluides de lavage pour percement, des agents d'extinction de feux ou comme remplissage de matelas à eau ou de coussins à eau.
